# EUROPEAN PATENT APPLICATION

(11) **EP 4 079 591 A1**
(43) Date of publication of application: **26.10.2022**
(21) Application number: 21170293.1
(22) Date of filing: 23.04.2021
(51) Int. Cl.: B60W 40/09, B60W 50/00, B60W 30/18

(54) **VEHICLE RESPONSE ADAPTATION METHOD, COMPUTER PROGRAM, COMPUTER-READABLE MEDIUM, ADVANCED DRIVER ASSISTANCE SYSTEM AND VEHICLE**

(71) Applicant: TOYOTA JIDOSHA KABUSHIKI KAISHA, Toyota-shi, Aichi-ken 471-8571 (JP)
(72) Inventor: CACCIA DOMINIONI, Giancarlo, 1140 BRUSSELS (BE)
(74) Representative: Cabinet Beau de Loménie

(57) **Abstract**

A computer-implemented vehicle response adaptation method for adapting a response of a vehicle to a driver (D) of a vehicle (1) during driving. The method comprises (S200) adapting the response of the vehicle to the driver of the vehicle.

Specifically, adapting the vehicle response comprises (S230) adapting the response of the vehicle based on driving performance and/or on driving level of the driver.

The invention further encompasses a computer program, a computer-readable medium, an advanced driver assistance system and a vehicle, which can be used to perform the vehicle response adaptation method.

## Description

### FIELD OF THE DISCLOSURE

The present disclosure concerns the adaptation of the response of a vehicle to its driver.

### BACKGROUND OF THE DISCLOSURE

In modern vehicles, a lot of work has been carried out to ensure that the vehicle reacts consistently to the driver's inputs (in particular, when the driver presses the brake pedal), regardless of the actual state of the vehicle.

On the other hand, advanced driver assistance systems (ADAS) have been developed which in many cases monitor the surroundings of the vehicle, so as to adapt the behavior of the vehicle to the driving situations. For instance, automatic emergency braking systems automatically apply the brakes if a risk of imminent collision is detected.

Such systems include e.g. driver monitoring systems, which monitor the driver of a vehicle during driving and issue warning signals when it is determined that the driver is tired and might need to rest.

Despite all these improvements, it has appeared however that the response of vehicles during driving can still be improved so as to offer even higher level of safety and an improved driving experience.

### DISCLOSURE OF THE INVENTION

In order to address the above-described problems of existing vehicle response determination methods, the following method is proposed. This method is a computer-implemented vehicle response adaptation method for adapting a response of a vehicle to a driver of a vehicle during driving.

This method comprises:
S200) adapting the response of the vehicle to the driver of the vehicle;
wherein adapting the response of the vehicle comprises:
S230) adapting the response of the vehicle based on driving performance(s) and/or on driving level(s) of the driver.

In the present document, when a noun is written followed by '(s)', it means that the considered object or item can be in the singular or plural form. For instance, the expression 'object(s)' means 'at least one object'. Accordingly, a sentence like 'Object(s) are present' includes the singular form, that is, it encompasses the case where a single object is present.

It should be noted that 'adapting the response of the vehicle' encompasses modifying the value of a control of the vehicle, but also issuing a control for the vehicle (that is, issuing a control, which would not have been issued otherwise). For instance, adapting the response of the vehicle may comprise issuing a message to the driver.

In some embodiments, the adaptation of the response of the vehicle is predetermined. However, in other embodiments, it can be customized by the user of the vehicle.Herein, the driving level is a variable (possibly a complex variable including multiple values) which represents the driving skill of the driver: It represents his or her capability to drive correctly, at least safely.

In some embodiments, the method comprises:
S210) one or more times, evaluating the driving performance of the driver by comparing how the driver drove to a predetermined expected way of driving the vehicle;

S220) based on the result of the evaluation(s), determining or adjusting a driving level of the driver; and subsequently,
at step S230, adapting the response of the vehicle based on the driving level of the driver.

The driving level may comprise values which indicate the capability of the driver to drive correctly in different driving situations.

'Driving situations' includes herein situations like crossing an intersection (for instance a roundabout), doing an unprotected left-turn (in countries where vehicles drive on the right-hand side), etc.

Accordingly, in some embodiments, the method further comprises (step S110) detecting whether the driver is faced with a specific driving situation among a predetermined set of potential specific driving situations; at step S210, the evaluation is performed on the basis of how the driver drove the vehicle when faced with the specific driving situation; and the driving level of the driver is determined or adjusted at step S220 per driving situation.

Note that the driver is faced with a specific driving situation slightly before, and usually until slightly after, really being in the considered specific driving situation. For instance, if the specific driving situation is 'crossing an intersection', the driver is faced with this situation as soon as when the vehicle approaches the intersection, before actually entering the intersection; and (s)he remains faced with that situation until the vehicle has fully left the intersection, that is, has driven usually a few meters or tens of meters after leaving the intersection.

For a considered specific driving situation the driving level may further comprise values which indicate the capability of the driver to drive correctly for different values of feature(s) of the considered driving situation.

For instance, when the specific driving situation 'crossing an intersection' is considered, the complexity of the intersection may be considered as a relevant feature to assess the driving level of the driver. Consequently, for the specific situation 'crossing an intersection', the driving level may comprise values which indicate the capability of the driver to drive correctly for different values of the complexity of the intersection.

Accordingly, in some variants of the above embodiments, the method further comprises (step S120) determining feature(s) of the detected specific driving situation; at step S210, the evaluation is performed on the basis of how the driver drove the vehicle when faced with the specific driving situation, taking into account the determined feature(s) of the specific situation; and at step S220, the driving level of the driver is determined per driving situation, further taking into account the determined feature(s) of the specific situation.

For instance, the specific situation is 'crossing an intersection'. The method may distinguish different levels of complexity of intersections, and then evaluate the driving performance of the driver taking into account the level of complexity of the intersection.

In the embodiments which include a comparison between how the driver drove and a predetermined expected way of driving the vehicle, the comparison can be based on different aspect(s) of driving. It can be based in particular on a visual performance of the driver, and/or a dynamic performance (or dynamic driving performance) of the driver. (A 'visual performance' and a 'dynamic performance' are defined below).

Consequently, in some embodiments, at step S210, comparing the way the driver drove to an expected way of driving the vehicle takes into account at least one of:
- direction(s) and/or duration(s) and/or timing(s) of look(s) the driver cast at surroundings of the vehicle and/or at rear- or side- view device(s) of the vehicle,
- direction(s) and/or duration(s) and/or timing(s) of look(s) the driver cast at traffic sign(s) and/or at other mobile object(s) moving near the vehicle,
- position(s), speed(s) and/or acceleration(s) of the vehicle, relative to the ground and/or to other mobile object(s) stationary or moving near the vehicle,
- action(s) taken by the driver on actuator(s) of the vehicle (e.g. turn indicator(s)),
- environmental circumstances before.

This/these element(s) are preferably calculated only based on the period during which the driver is faced with the detected specific driving situation, or a part thereof.

This/these element(s) may comprise in particular the relative distance, speed and acceleration relative to a vehicle preceding the ego-vehicle, in the same lane. And/or position, speed relative to the lane in which the vehicle is moving.

'Environmental circumstances' refer herein to either to atmospheric circumstances, that is, whether there is rain, fog, wind, hail, etc, and/or to factors related to visibility, such as an estimated distance of visibility, an estimation of the presence of raindrops on the windshield, etc.

In some embodiments, the method further comprises (step S110) detecting whether the driver is faced with a specific driving situation among a predetermined set of potential specific driving situations. Moreover, the vehicle response is adapted at step S200 only when a specific driving situation has been detected, and/or, when step S230 is performed while the driver is faced with the specific driving situation, the response of the vehicle is adapted based on the specific driving situation.

In some embodiments, at step S230, adapting the response of the vehicle includes at least one of adapting message(s) issued by the vehicle and issuing control(s) to actuators of the vehicle.

In some embodiments, the method further comprises automatically identifying the identity of the driver.

In some embodiments, step S200 is performed iteratively; and at step S230, the response of the vehicle is adapted based on driving level(s) and/or driving performance(s) and/or response(s) of the vehicle determined (i.e. adapted, regarding the response of the vehicle) during a former execution of step S200.

In a particular implementation, the proposed method is determined by computer program instructions.

Accordingly, another purpose the present disclosure is to propose computer program(s) comprising instructions which, when the instructions are executed by processor(s), cause the processor(s) to carry out the steps of a vehicle response adaptation method as disclosed herein.

The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the above-defined computer program(s) stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes an advanced driver assistance system (ADAS), comprising processor(s) and a computer-readable medium; the computer-readable medium comprising computer instructions stored therein, wherein the instructions, when executed by the processor(s), cause the processor(s) to carry out the steps of a vehicle response adaptation method as disclosed herein.

The present disclosure can be implemented in any kind of human-driven vehicle. It therefore further includes a vehicle comprising an advanced driver assistance system as disclosed herein.

### BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which:
Fig.1 is a schematic representation in top view of a vehicle equipped with an advanced driver assistance system according to the present disclosure;
Fig.2 is a block diagram representing an embodiment of a vehicle response adaptation method according to the present disclosure;
Fig.3 is a block diagram representing a first exemplary implementation of a vehicle response adaptation method according to the present disclosure;
Fig.4 is a block diagram representing a first part of a second exemplary implementation of a vehicle response adaptation method according to the present disclosure;
Fig.5 is a block diagram representing a second part of the second exemplary implementation of a vehicle response adaptation method according to the present disclosure;
Fig.6 is a block diagram representing a third exemplary implementation of a vehicle response adaptation method according to the present disclosure.

### DESCRIPTION OF PREFERRED EMBODIMENTS

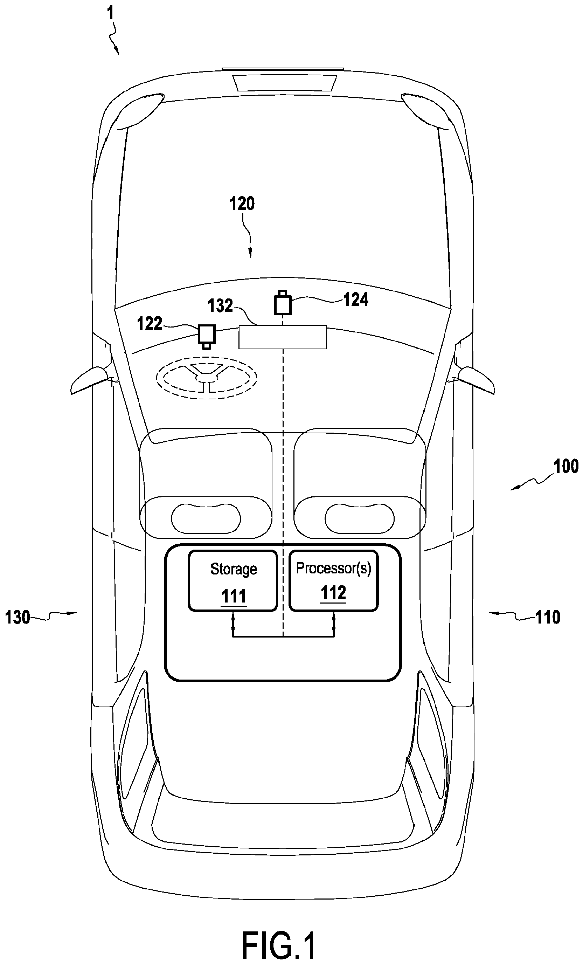

An advanced driver assistance system ADAS (hereafter, 'ADAS') according to the present disclosure will now be presented in relation with Fig.1.

The ADAS system is presented mounted on a vehicle 1. The vehicle 1 is a car, which represents a non-limiting example of a vehicle on which a system according to the present disclosure can be mounted.

The ADAS system comprises a central driving computer 110 ('computer 110'), a set of sensors 120, each sensor being connected to computer 110, a driver interface 130, and various other components.

Most components of the ADAS system are shared components, which are used to perform multiple tasks. That is, the components of the ADAS system perform the functions of the ADAS system, but may also perform other functions in vehicle 1.

Although computer 110 is represented on Fig.1 in a single box, it may comprise one or more processors, and can therefore be a distributed calculation system, distributed over a plurality of processors, possibly physically arranged on different locations.

The set of sensors 120 comprises sensors configured to perceive the situation inside and outside vehicle 1. In this purpose, it comprises lidars, radars and several cameras. One of these sensors, only a driver monitoring camera 122 and a front camera 124 are represented on Fig.1.

The driver interface 130 comprises a display 132, on which various messages can be displayed for the driver of the vehicle.

The functions of the ADAS system are mainly implemented by computer 110.

Computer 110 comprises a non-transitory storage medium 111 and one or more processor(s) 112.

The computer 110, in particular in its storage medium 101, stores instructions which when executed by the processor(s) 102 cause the processor(s) 102 to implement the different functions of the ADAS system.

The processor(s) 112 are intended to be representative of the presence of any one or more processors or processing devices, of any of a variety of forms.

A computer program P to adapt a response of the vehicle to the driver, in accordance with the present disclosure, is stored in storage medium 101. This program, and the storage medium 101, are examples respectively of a computer program and a computer-readable recording medium pursuant to the present disclosure.

The storage medium 101 of the computer 110 indeed constitutes a recording medium according to the invention, readable by the one or more processor(s) 112 and on which said program is recorded.

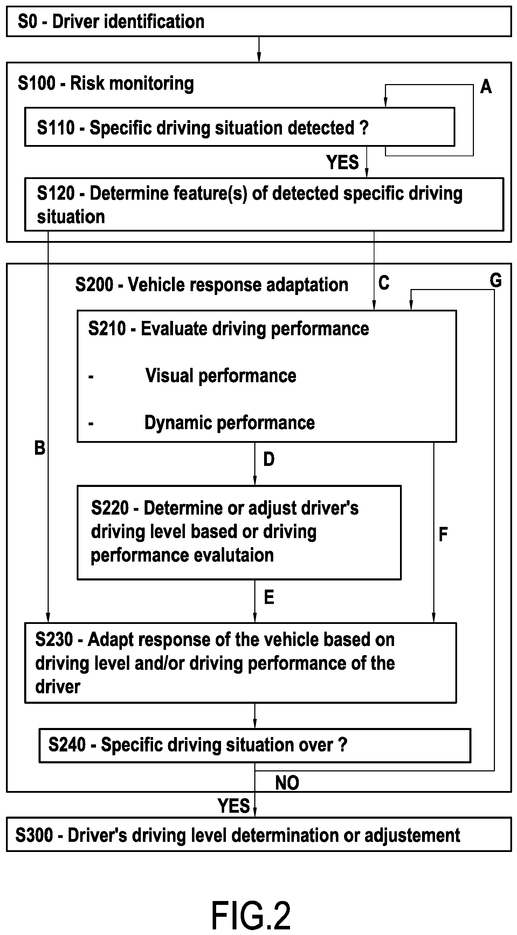

Exemplary embodiments of methods for adapting a response of a vehicle to a driver (D) of a vehicle (1) during driving according to the present disclosure will now be described in relation with Fig.2.

In a first step S0, the driver of the vehicle is identified.

The identification can be performed by any means, including facial recognition (using the driver monitoring system's camera), fingerprint recognition, etc.

Note, the driver identification step S0 is optional. The method can be implemented without identifying the driver. In this case, the driver's driving level is for instance re-calculated at each new trip.

A risk monitoring step S100 is then iteratively performed.

This step S100 is performed in order to detect whether the driver is faced with a specific driving situation (among a list of predetermined specific driving situations).

When it is detected that the driver is faced with a specific driving situation, a vehicle response adaptation step S200 and (optionally) a driver's driving level adjustment step S300 are triggered.

This or these steps are usually performed iteratively over one or more sub-loops G. As it will be explained below, the sub-loops G are performed as long as the detected specific driving situation is not over.

### S100 - Risk monitoring

In the risk monitoring step S100, the vehicle constantly (that is, at regular time intervals) performs an operation S110 of detecting whether the driver is faced with a specific driving situation (Arrow A) among predetermined set of driving situations. These situations are driving situations for which it is considered that the vehicle response has to be adapted to the driver.

Detecting such driving situations is performed using the known methods of ADAS systems: The sensors 120 of vehicle 1 (its cameras, radars, lidars) constantly monitor the surroundings of the vehicle. In addition, additional data may be acquired using a V2V (vehicle-to-vehicle) or V2I (vehicle-to-infrastructure) communication system. The acquired data are analyzed by the ADAS system. The ADAS system identifies mobile objects around the vehicle, and determines the position, speed and acceleration of the vehicle and of the surrounding mobile objects. The ADAS system further identifies the location of the vehicle, for instance by GPS, and detects any stationary object in the surroundings of the vehicle or ahead of the vehicle (using the acquired data and/or a map of the area where the vehicle is moving).

On this basis, the ADAS system determines whether the driver is faced with a specific driving situation.

The method preferably further comprises, once a specific driving situation has been detected, determining feature(s) of the specific driving situation (step S120). For instance, when the specific driving situation is 'crossing an intersection', the complexity of the intersection can be a feature of that specific driving situation, which can be used to better characterize the driving level of the driver.

The value(s) of the determined feature(s) can be recorded as continuous values (e.g., real numbers), or as discrete values, for instance as binary values. For instance, an intersection can be recorded as a simple intersection or a complex intersection.

As soon as a specific driving situation has been detected and (preferably) the features thereof have been determined, the step S200 of adapting the vehicle response is started.

### S200 - Vehicle response adaptation

In some embodiments, the driver's driving level is predetermined.

In such embodiments, the response of the vehicle can be adapted directly (arrow B) to the specific driving situation that has been detected, without evaluating the current driving performance of the driver.

In such embodiments, the next step of the method consists therefore in adapting the response of the vehicle. This response can be based on the predetermined driver's driving level, and/o on previous evaluations of the driver's driving performance (step S230). It may further take into account messages that have been previously transmitted to the driver.

Adapting the response of the vehicle usually essentially comprises adapting messages issued by the vehicle. For instance, drivers who are identified as having more trouble dealing with some specific driving situations will receive more assistance, more messages, than skilled drivers, to help them deal with the detected driving situation(s). The number and/or the content of the messages may be adapted.

'Messages issued by the vehicle' includes herein messages transmitted to the driver (that is, displayed on the display 132 of the vehicle), messages transmitted to other road users present around the vehicle (e.g. transmitted to other vehicles, to cyclists, pedestrians, etc.), and/or messages transmitted to remote locations.

The messages issued by the vehicle can be visual messages, for instance displayed on a screen or on the windscreen; they can also be auditory or haptic messages.

The adaption of the vehicle's response to the specific driving situation may also (or alternatively) comprise issuing or adapting control(s) sent to actuators of the vehicle. For instance, the settings of the suspension of the vehicle may be adapted if the driver's driving level suggests a limited capacity to avoid potholes.

In some embodiments, adapting the response of the vehicle at step S200 includes evaluating the driving performance of the driver (step S210 - Arrow C).

This evaluation is performed by comparing how the driver drove the vehicle to a predetermined expected way of driving the vehicle.

In some embodiments, the comparison is based on the driving performance of the driver during the whole period since the specific driving situation was detected at step S110. In other embodiments, the comparison is based on the driving performance of the driver only during a last time period (having a predetermined duration; for instance 0,5 seconds).

In step S210, comparing how the driver drove the vehicle to a predetermined expected way of driving the vehicle can be based on a visual performance of the driver and/or a dynamic performance of the driver.

Evaluating the visual performance of the driver consists in evaluating whether the driver did actually look in directions (and/or at specific elements around the vehicle) in or at which (s)he can be expected to look during the detected driving situation in order to drive safely.

Part or all of the following elements can be determined and used as a basis for evaluating the visual performance of the driver at step S210:
- direction(s) and/or duration(s) and/or timing(s) of look(s) the driver cast at surroundings of the vehicle and/or at rear- or side- view device(s) of the vehicle,
- direction(s) and/or duration(s) and/or timing(s) of look(s) the driver cast at traffic sign(s) and/or at mobile object(s) moving near the vehicle.

To evaluate the visual performance of the driver, the above element(s) are compared to reference values which represent the looks that an ideal driver (a theoretical driver driving perfectly) would cast in the considered situation while driving.

Moreover, evaluating the dynamic performance of the driver consists in comparing variable(s) characterizing the motion of the vehicle, such as its trajectory, speed, acceleration, distance(s) between the vehicle and neighbour vehicles, to reference values considered safe in the considered specific driving situation in order to drive safely.

Accordingly, part or all of the following elements can be determined and used as a basis for evaluating the dynamic performance of the driver at step S210:
- position(s), speed(s) and/or acceleration(s) of the vehicle, relative to the ground and/or to mobile object(s) stationary or moving near the vehicle,
- action(s) taken by the driver on actuator(s) of the vehicle (e.g. turn indicator(s)), and
- environmental circumstances.

These elements can include in particular the relative distance, speed and acceleration of the vehicle relative to a vehicle preceding the ego-vehicle, in the same lane, and/or position(s), speed(s) of the vehicle relative to the lane in which it is moving.

'Environmental circumstances' refer herein to either to atmospheric circumstances, that is, whether there is rain, fog, wind, hail, etc, and/or to any variable(s) related to visibility, such as an estimated distance of visibility, an estimation of the presence of raindrops on the windshield, etc.

The above elements are compared to reference values which represent the corresponding values (position, speed, acceleration, distance, etc.) that an ideal driver would select for the vehicle in the considered driving situation.

The reference values can be predetermined or can be calculated at step S200 taking into account actual features of the current driving situation.

After the driving performance of the driver has been evaluated at step S210, two possibilities can be considered to implement the method:
- perform step S220 in order to determine or adjust the driving level of the driver (arrow D), and then perform step S230 to adapt the response of the vehicle based on the driving level of the driver and/or the driving performance of the driver (arrow E); or
- directly perform step S230 to adapt the response of the vehicle based on the driving level and/or driving performance of the driver (arrow F).

We describe here the first alternative (The second alternative is similar, except that step S220 is not carried out).

In this first alternative, once the driving performance of the driver has been evaluated at step S210, the driver's driving level is determined (at the first iteration of the method) or adjusted (during subsequent iterations) at step S220.

Preferably, the driving level is determined or adjusted at this step per driving situation, and even more preferably per feature of the specific driving situation. That is, the driving level comprises value(s) which depend on the driving situation.

Moreover, it may further depend on the values of feature(s) of the driving situation. For instance, the driving level can include a first evaluation (e.g. good/bad) regarding a skill of the driver for 'crossing a simple intersection' and a second evaluation (e.g. good/bad) regarding a skill of the driver for 'crossing a complex intersection'.

The value(s) of the driver's driving level can be recorded as continuous values (e.g., real numbers), or as discrete values, for instance as binary values.

Then, for the above-mentioned first or second alternatives, the response of the vehicle is adapted (step S230), based on the driving level(s) and/or the driving performance(s) of the driver.

The plural form is used above because the response of the vehicle may be based on a plurality of values of the driving level and/or of the driving performance. These values may be values of variable(s) of the driving level or driving performance at different time points, over a plurality of executions of step S200 (that is, over a plurality of sub-loops G). They may also correspond to different variables constituting the driving level or the driving performance. For instance the response might be adapted based on two aspects of the driving level of the driver, such as his/her capacity to drive in roundabouts, and his/her ability to drive on slippery roads.

For instance, the driving level may take into account a plurality of driving performance evaluations of the driver, calculated when the driver encountered a plurality of times a specific driving situation (and, as the case may be, encountered a plurality of times the considered specific driving situation with furthermore the same feature(s)). The driving level of the driver may for instance be determined by averaging the above-mentioned driving performance evaluations of the driver, or the like.

Various functions may be selected to calculate the driving level of the driver based on driving performance evaluations of the driver. For instance, the driving level of the driver may be calculated based the worst driving performance evaluation in the set of evaluations. It may also be based on a predetermined proportion (e.g., 25%) of the driving performance evaluations which received the worst estimations, etc.

As a concrete example, when the driver has faced several times the specific driving situation 'roundabout', the driving level of the driver may comprise a value representing the driving level of the driver for driving in a roundabout, which value is calculated as an average of the respective driving performances of the driver when (s)he drove his/her vehicle around the roundabout said several times.In this embodiment, the response of the vehicle is adapted based on the specific driving situation that has been detected, and preferably, if any, on the feature(s) thereof which have been determined.

For instance, when adapting the vehicle's response comprises adapting messages issued by the vehicle, the adaptation of the messages preferably takes into account the detected specific driving situation, and the determined feature(s) thereof (if any). For instance, drivers who are identified as having more trouble dealing with some specific driving situations will receive more assistance for dealing with such driving situations than very skilled drivers. The number and/or the content of the messages may be adapted.

In addition or as an alternative, when adapting the vehicle's response comprises issuing or adapting control(s) sent to actuators of the vehicle, the control(s) issued or adapted are preferably issued or adapted to the detected specific driving situation, and the determined feature(s) thereof (if any). For instance, the settings of the suspension of the vehicle may be adapted if it is detected that the vehicle arrives in a road segment where there are many potholes, and the driver's driving level mentions a poor capacity to avoid potholes.

At the end of each iteration of sub-loop G, it is determined whether the driver is still faced with the detected driving situation (Step S240).

If the answer is YES, the algorithm jumps back at step S210 (arrow G). Consequently, steps S210, S220 (optionally) and S230 are performed iteratively in sub-loop G as long as the driver is still faced with the detected specific driving situation.

When the answer is NO, the algorithm quits the sub-loop G. It then performs an optional driver's driving level determination or adjustment step S300.

### Step S300 - Driving level determination or adjustment

In some embodiments, step S220 is not performed at each sub-loop and possibly is never performed in step S200. In these cases, when a specific driving situation is detected at step S110, the response of the vehicle is adapted at step S200 based on a previously calculated value of the driver's driving level, which remains constant during all the sub-loops G, that is, as long as the driver is faced with the detected specific driving situation.

Then, in these embodiments, the driver's driving level is determined or updated at step S300, on the basis of the driver's driving performance(s) when the driver is not faced anymore with the detected specific driving situation.

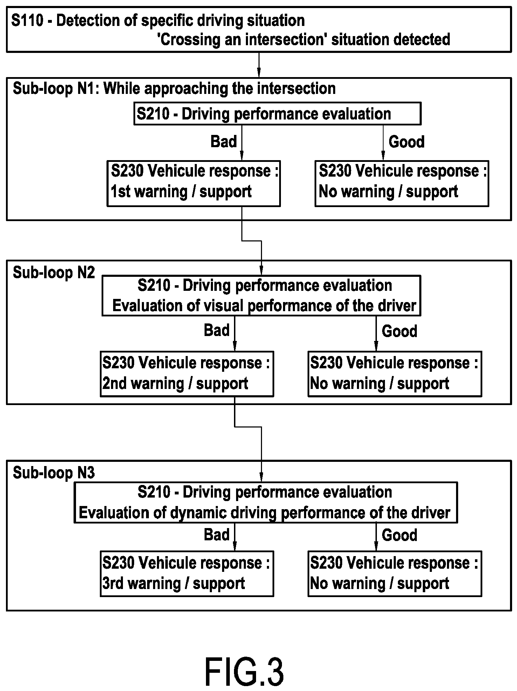

To illustrate the present disclosure, three exemplary implementations of the method are now going to be presented in relation with Figs.3-6. In these examples, 'crossing an intersection' is used as an example of a 'specific driving situation' detected at step S110. In addition, in these examples, for an intersection, the feature(s) that can be determined at step S120 are only the complexity of the intersection: The intersection can be classified either as 'simple' or 'complex'.

Importantly, note that on Figs.3-6, only a part of the steps of the method are shown: For sake of clarity, the steps which are not necessary to understand the proposed implementation are not shown. In addition, several iterations (several sub-loops G) may be shown on these figures.

Fig.3 illustrates a first implementation of the method, in a period during which the vehicle crosses an intersection.

When the vehicle approaches the considered intersection, at step S110 it is detected that the driver is faced with the specific driving situation 'crossing an intersection'. The complexity of the intersection is then determined at step S120.

Then, step S200 is executed multiple times while the vehicle approaches, crosses and leaves the intersection.

### Sub-loops N1:

In a first group of iterations N1 of step S200 (of sub-loops G), at each step S210, the driving performance of the driver is evaluated and classified as 'good' or 'bad'.

At each step S230, the response of the vehicle is adapted:
- While the driving performance of the driver is 'good', the response of the vehicle to the specific situation detected (crossing the intersection) is adapted to the driving performance of the driver: No warning nor support is issued.
- Conversely, if in one sub-loop the driving performance of the driver is 'bad', the response of the vehicle is adapted by issuing a first warning and/or support.

A second group of sub-loops N2 is then initiated.

### Sub-loops N2:

Then, in the sub-loops N2, at each step S210, the visual performance of the driver is evaluated.

Then, at each step S230 the response of the vehicle to the specific situation is adapted:
- While it is determined that the driver's visual performance is good (which may mean that the driver looked at appropriate directions, when approaching the intersection, for instance), it is concluded at step S230 that the first warning and/or support that has been issued is enough, and no further warning or support is issued;
- Conversely, if in one sub-loop it is concluded that the driver's visual performance is bad, the response of the vehicle is adapted by issuing a second warning and/or support.

A third group of sub-loops N3 is then initiated.

### Sub-loops N3:

Then, in the sub-loops N3, at each step S210, the dynamic driving performance of the driver is evaluated.

Then, at each step S230 the response of the vehicle to the specific situation is adapted:
- While it is determined that the driver's dynamic driving performance is good, it is concluded at step S230 that the first and second warnings and/or support that have been issued are enough, and no further warning or support is issued;
- Conversely, if in one sub-loop it is concluded that the driver's dynamic performance is bad, the response of the vehicle is adapted by issuing a third warning and/or support.

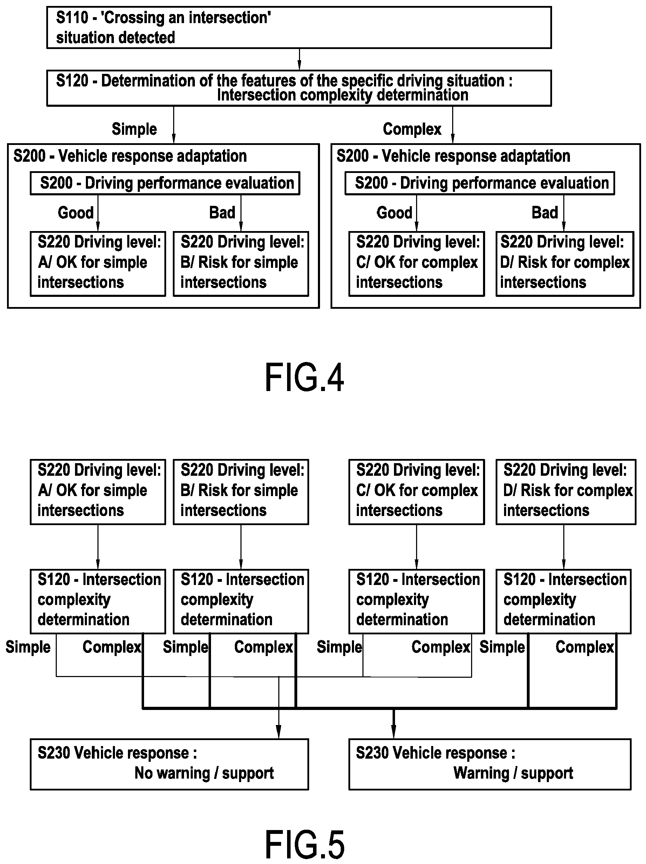

Figs.4 and 5 illustrate a second implementation of the method: Fig.4 illustrates how the driver's driving performance is evaluated (step 210) and how the driver level is consequently determined (step S220). Fig.5 illustrates how, based on the driver's driving level that has been determined, the response of the vehicle is adapted (step S230).

When the vehicle approaches the considered intersection, at step S110 it is detected that the driver is faced with the specific driving situation 'crossing an intersection'. The complexity of the intersection is then determined at step S120: The intersection is classified either as 'simple' or 'complex'.

Then, step S200 is executed multiple times while the vehicle approaches, crosses and leaves the intersection.

At step S210, the driving performance of the driver is evaluated. In this embodiment, the driving performance is classified either as 'good' or 'bad'.

Then, at step S220 the driver's driving level is determined as follows:
- If the intersection is simple: the driving level is recorded as 'Ok' or 'Risky' (noted 'Risk') for simple intersections, depending on whether the driving performance of the driver has been determined as 'Good' or 'Bad'.
- If the intersection is complex: the driving level is recorded as 'Ok' or 'Risky' (noted 'Risk') for complex intersections, depending on whether the driving performance of the driver has been determined as 'Good' or 'Bad'.

These evaluations of the driving level may be based only on the current sub-loop, or on the last M sub-loops where M is a set number of iterations, or on all the iterations since the driver was faced with the situation 'crossing an intersection'.

Fig.5 shows how the response of the vehicle is adapted at step S230, in the second implementation of the method.

In this case, the response is adapted based on the driver's driving level, determined as explained above.

Depending on the value of the driving level, and, for the specific driving situation detected, for the value of the feature(s) of the specific driving situation determined at step S120 (in the present case: the complexity of the intersection crossed), it is determined whether to issue or not a warning signal or some support.

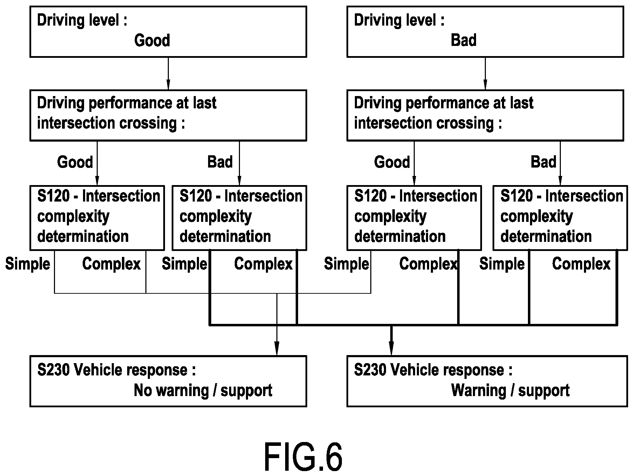

Fig.6 illustrates a third implementation of the method.

In this case, it is supposed that the vehicle has already travelled a sufficiently long trip, during which the driver's driving level has been evaluated. The two boxes in the upper part of Fig.6 correspond to the cases where the driver's driving level has been determined as good or bad respectively.

In addition, the vehicle has recently crossed an intersection: The driving performance of the driver while crossing this intersection has been evaluated, at step S300, and classified either as 'good' or as 'bad'.

The method is executed while the vehicle now approaches another intersection.

At step S110, it is detected that the driver is faced with the specific driving situation 'crossing an intersection'.

At step S120, the complexity of the new intersection is determined.

Then, step S230 is directly performed (arrow B on Fig.2.

Fig.6 then shows, for each case (each level of complexity of the intersection, i.e. simple or complex ; and each driving level of the driver (good or bad), how the response of the vehicle is adapted at step S230: Depending on the case, a warning or some support is issued, or conversely no warning or support is issued.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. A computer-implemented vehicle response adaptation method for adapting a response of a vehicle to a driver (D) of a vehicle (1) during driving, the method comprising:
S200) adapting the response of the vehicle to the driver of the vehicle;
wherein adapting the response of the vehicle comprises:
S230) adapting the response of the vehicle based on driving performance(s) and/or on driving level(s) of the driver.

2. The method according to claim 1, wherein the method comprises:
S210) one or more times, evaluating the driving performance of the driver by comparing how the driver drove to a predetermined expected way of driving the vehicle;
S220) based on the result of the evaluation(s), determining or adjusting a driving level of the driver; and subsequently,
at step S230, adapting the response of the vehicle based on the driving level of the driver.

3. The method according to claim 2, further comprising:
S110) detecting whether the driver is faced with a specific driving situation among a predetermined set of potential specific driving situations;
at step S210, the evaluation is performed on the basis of how the driver drove the vehicle when faced with the specific driving situation; and
the driving level of the driver is determined or adjusted at step S220 per driving situation.

4. The method according to claim 3, further comprising:
S120) determining feature(s) of the detected specific driving situation;
at step S210, the evaluation is performed on the basis of how the driver drove the vehicle when faced with the specific driving situation, taking into account the determined feature(s) of the specific situation; and
at step S220, the driving level of the driver is determined per driving situation, further taking into account the determined feature(s) of the specific situation.

5. The method according to any one of claims 2 to 4, wherein at step S210, comparing the way the driver drove to an expected way of driving the vehicle takes into account at least one of:
- direction(s) and/or duration(s) and/or timing(s) of look(s) the driver cast at surroundings of the vehicle and/or at rear- or side- view device(s) of the vehicle,
- direction(s) and/or duration(s) and/or timing(s) of look(s) the driver cast at traffic sign(s) and/or at other mobile object(s) moving near the vehicle,
- position(s), speed(s) and/or acceleration(s) of the vehicle, relative to the ground and/or to other mobile object(s) stationary or moving near the vehicle,
- action(s) taken by the driver on actuator(s) of the vehicle,
- environmental circumstance(s).

6. The method according to any one of claims 2 to 5, further comprising:
S110) detecting whether the driver is faced with a specific driving situation among a predetermined set of potential specific driving situations; and wherein
the vehicle response is adapted at step S200 only when a specific driving situation has been detected, and/or,
when step S230 is performed while the driver is faced with the specific driving situation, the response of the vehicle is adapted based on the specific driving situation.

7. The method according to any one of claims 1 to 6, wherein at step S230, adapting the response of the vehicle includes at least one of adapting message(s) issued by the vehicle and issuing control(s) to actuators of the vehicle.

8. The method according to any one of claims 1 to 7, further comprising automatically identifying the identity of the driver.

9. The method according to any one of claims 1 to 8, wherein
Step S200 is performed iteratively; and
at step S230, the response of the vehicle is adapted based on driving level(s) and/or driving performance(s) and/or response(s) of the vehicle determined during a former execution of step S200.

10. One or more computer program(s) comprising instructions which, when the instructions are executed by processor(s), cause the processor(s) to carry out the steps of a vehicle response adaptation method according to any one of claims 1 to 9.

11. A non-transitory computer readable medium, having the one or more computer program(s) according to claim 10 stored thereon.

12. An advanced driver assistance system (ADAS), comprising processor(s) and a computer-readable medium;
the computer-readable medium comprising computer instructions stored therein, wherein the instructions, when executed by the processor(s), cause the processor(s) to carry out the steps of a vehicle response adaptation method according to any one of claims 1 to 9.

13. A vehicle (1) comprising an advanced driver assistance system (ADAS) according to claim 12.
